# EUROPEAN PATENT APPLICATION

(11) **EP 2 621 200 A1**
(43) Date of publication of application: **31.07.2013**
(21) Application number: 12152809.5
(22) Date of filing: 27.01.2012
(51) Int. Cl.: H04W 4/08, H04W 48/02

(54) **Method and a device for enabling a mobile terminal to be served by a base station according to a priority level**

(71) Applicant: Mitsubishi Electric R&D Centre Europe B.V., 1119 NS Schiphol Rijk (NL); Mitsubishi Electric Corporation, Chiyoda-ku Tokyo 100-8310 (JP)
(72) Inventor: Brunel, Loïc, 35708 RENNES Cedex 7 (FR); Bonneville, Hervé, 35708 RENNES Cedex 7 (FR)
(74) Representative: Maillet, Alain

(57) **Abstract**

The present invention concerns a method for enabling a mobile terminal to be served by a base station according to a priority level among plural priority levels that the base station provides to mobile terminals, **characterized in that** the base station has plural closed subscriber groups, each closed subscriber group corresponding to a priority level provided to mobile terminals belonging to the closed subscriber group, the method comprising the steps of:
- transferring by the base station, for each closed subscriber group of the base station, a signal representative of the closed subscriber group of the base station,
- selecting, among the closed subscriber groups of the base station the mobile terminal belongs to, one of the closed subscriber groups which provide the highest priority levels to the mobile terminal.

## Description

The present invention relates generally to a method and a device for enabling a mobile terminal to be served by a base station according to a priority level among plural priority levels.

Wireless cellular telecommunication networks are largely deployed but there are still some areas not covered by the base stations of the wireless cellular telecommunication network.

For example, the access to the wireless cellular telecommunication network might not be possible for a mobile terminal located in a building, if the signals radiated by the base stations and/or by the mobile terminal are too attenuated.

Solutions are proposed today. Particular base stations, like home base stations or femto base stations, provide coverage areas within the buildings.

The home base stations or femto base stations provide a limited coverage area.

Furthermore some home base stations provide a restricted access to mobile terminals. Only the mobile terminals which belong to a particular closed subscriber group (CSG) can access the home base station resources in order to establish a communication with a remote telecommunication device.

Some other home base stations allow mobile terminals which do not belong to their closed subscriber group to access part of their resources.

Such solutions are not suited in case of areas, like universities, wherein many different kinds of people having mobile terminals, like students, researchers in different domains, guests, could use home base stations in order to access to the wireless cellular telecommunication network. There is no solution today which enables mobile terminals to access the wireless cellular telecommunication network with a finer granularity of the priority level given to them within the area.

The present invention aims at providing a solution which enables to provide a more important number of priority levels to mobile terminals for accessing the wireless cellular telecommunication network.

The present invention aims also to provide a solution which is simple to implement and which warrants to mobile terminals the best priority they can get when using home base stations resources in order to access the wireless cellular telecommunication network.

To that end, the present invention concerns a method for enabling a mobile terminal to be served by a base station according to a priority level among plural priority levels that the base station provides to mobile terminals, **characterized in that** the base station has plural closed subscriber groups, each closed subscriber group corresponding to a priority level provided to mobile terminals belonging to the closed subscriber group, the method comprising the steps of:
- transferring by the base station, for each closed subscriber group of the base station, a signal representative of the closed subscriber group of the base station,
- selecting, among the closed subscriber groups of the base station the mobile terminal belongs to, one of the closed subscriber groups which provide one of the highest priority levels to the mobile terminal.

The present invention concerns also a system for enabling a mobile terminal to be served by a base station according to a priority level among plural priority levels that the base station provides to mobile terminals, **characterized in that** the base station has plural closed subscriber groups, each closed subscriber group corresponding to a priority level provided to mobile terminals belonging to the closed subscriber group, the system comprising:
- means for transferring by the base station, for each closed subscriber group of the base station, a signal representative of the closed subscriber group of the base station,
- means for selecting, among the closed subscriber groups of the base station the mobile terminal belongs to, one of the closed subscriber groups which provide one of the highest priority levels to the mobile terminal.

Thus, a higher granularity of priority levels can be achieved using plural closed subscriber groups.

Furthermore, the priority handling can be carried out at the base station without involving the core network too much. For instance, the present invention saves some data base storage.

The selection of the closed subscriber group with a high priority enables best communication conditions for the mobile terminal.

According to a particular feature, at least one signal representative of a closed subscriber group is transferred on a frequency resource different from the frequency resource on which other signal or signals representative of a closed subscriber group or groups is or are transferred and once data are transferred between the base station and the mobile terminal, data are scheduled on any frequency resource.

Thus, it does not require mobile terminal signalling to indicate selected closed subscriber group when connecting to the base station.

The closed subscriber group selected by the mobile terminal is implicitly indicated by the frequency resource in which it sends its signalling for connection, including random access.

The approach also induces less random access channel (RACH) congestion on frequency resources corresponding to closed subscriber groups with high priority levels since the number of mobile terminals having high priority may be lower and the related number of RACH attempts also lower.

According to a particular feature, the selection of one of the closed subscriber groups which provide the highest priority levels to the mobile terminal is performed by the mobile terminal.

Thus, the selection does not imply additional bits in the measurement reports nor additional interaction with the core network.

According to a particular feature, the priority level of each closed subscriber group is broadcasted by the base station.

Thus, the mobile terminal does not have to store the priority levels of closed subscriber groups in its white list. Furthermore, the relative priority levels of closed subscriber groups can change from a base station to another.

According to a particular feature, the priority level of each closed subscriber group is memorized by the mobile terminal.

Thus, addition signalling broadcasted from base stations is not needed to indicate priority level of each closed subscriber group, saving resources used for transferring signals from the base station to the mobile terminal.

According to a particular feature, the mobile terminal transfers to the base station at least one measurement report on signals received by the mobile terminal from at least one base station and the mobile terminal reports only measurements on signals corresponding to the subscriber group or groups which provides or provide the highest priority level or levels to the mobile terminal.

Thus, the serving base station only considers base stations having at least one closed subscriber group the mobile terminal belongs to and having the highest priority level or levels as potential target base stations for handover.

According to a particular feature, the mobile terminal transfers to the base station at least one measurement report on at least one signal received by the mobile terminal from at least one neighbouring base station and the mobile terminal modifies measurements according to the priority level or levels corresponding to the measured signal or signals.

Thus, the serving base station gives more importance to base stations having at least one closed subscriber group the mobile terminal belongs to with higher priority levels when considering potential target base stations for handover.

According to a particular feature, the selection of one of the closed subscriber groups which provide the highest priority level to the mobile terminal is performed by the base station from at least one measurement report provided by the mobile terminal, the at least one measurement report comprising measurements on signals received by the mobile terminal from at least one neighbouring base station.

Thus, the handover procedure is more centralised at the base station. The base station takes a decision without letting the mobile terminal deciding or biasing the decision. By biasing the measurements, it may have some negative impact on power control, handover and inter-cell interference.

Boosting measurements in reports of high-priority closed subscriber groups may result in too-early handover. Deboosting measurements in reports of low-priority closed subscriber groups may result in too-late handover and underestimation of experienced inter-cell interference.

Hence, when selection is performed by the base station, handover, power control and inter-cell interference coordination are improved.

Furthermore, it allows to optimize the priority level versus path loss trade-off when choosing the target base station and closed subscriber group.

Indeed, there might be a closed subscriber group with lower priority level with high path gain i.e. allowing high spectral efficiency on a low proportion of resources, and a closed subscriber group with high priority level with low path gain i.e., allowing low spectral efficiency on a high proportion of resources. The serving base station has to consider both aspects when choosing the target base station.

According to a particular feature, the at least one measurement report further comprises information indicating the priority levels of at least a part of the closed subscriber groups the mobile terminal belongs to.

Thus, the measurement report provides relevant information in order for the base station to decide which base station the mobile terminal will be handed over to. The priority levels of all closed subscriber groups in the base station neighbourhood do not have to be stored in each base station. It is particularly interesting when the priority level of a closed subscriber group varies from one home base station to another.

According to a particular feature, information indicating the priority levels of at least a part of the closed subscriber groups the mobile terminal belongs to is under the form of information bits.

Thus, the signalling of the priority level of a closed subscriber group can be performed independently from other reported closed subscriber groups. For instance, measurements on different closed subscriber groups can be reported in different measurement reports.

According to a particular feature, information indicating the priority levels of at least a part of the closed subscriber groups the mobile terminal belongs to is the order of the measurements within the measurement reports.

Thus, the relative priority levels are signalled without any additional bit. It saves some uplink resources, i.e. resources used for transferring signals from the mobile terminal to the base station.

According to a particular feature, the base station obtains information indicating the priority levels of at least a part of the closed subscriber groups the mobile terminal belongs to from at least one other base station.

Thus, the priority levels of closed subscriber groups in the neighbourhood of a base station do not have to be signalled by the mobile terminal. It saves some uplink resources while still allowing to optimize the priority level versus path loss trade-off when choosing the target base station and closed subscriber group.

According to still another aspect, the present invention concerns computer programs which can be directly loadable into a programmable device, comprising instructions or portions of code for implementing the steps of the method according to the invention, when said computer programs are executed on a programmable device.

Since the features and advantages relating to the computer programs are the same as those set out above related to the method and apparatus according to the invention, they will not be repeated here.

The characteristics of the invention will emerge more clearly from a reading of the following description of an example embodiment, the said description being produced with reference to the accompanying drawings, among which :
Fig. 1 represents a wireless cellular telecommunication network in which the present invention is implemented;
Fig. 2 is a diagram representing the architecture of a home base station in which the present invention is implemented;
Fig. 3 is a diagram representing the architecture of a mobile terminal in which the present invention is implemented;
Fig. 4 discloses an example of plural closed subscriber groups which are transferred by a first home base station according to the present invention;
Fig. 5 discloses an example of plural closed subscriber groups which are transferred by a second home base station according to the present invention;
Fig. 6 discloses a first example of an algorithm executed by the first home base station according to the present invention ;
Fig. 7 discloses an example of an algorithm executed by a mobile terminal when the first home base station executes the algorithm of Fig. 6;
Fig. 8 discloses an example of an algorithm executed by the second home base station according to the present invention;
Fig. 9 discloses an example of an algorithm executed by a mobile terminal when the second home base station executes the algorithm of Fig. 8;
Fig. 10 discloses a first example of an algorithm executed by the first and/or the second home base stations according to the present invention;
Fig. 11 discloses a first example of an algorithm executed by a mobile terminal when the first and/or the second home base stations execute the algorithm of Fig. 10;
Fig. 12 discloses a second example of an algorithm executed by a mobile terminal when the first and/or the second home base stations execute the algorithm of Fig. 10;
Fig. 13 discloses a third example of an algorithm executed by a mobile terminal when the first and/or the second home base stations execute the algorithm of Fig. 10;
Fig. 14 discloses a second example of an algorithm executed by the first and/or the second home base station according to the present invention;
Fig. 15 discloses an example of an algorithm executed by a mobile terminal when the first and/or the second home base stations execute the algorithm of Fig. 14.

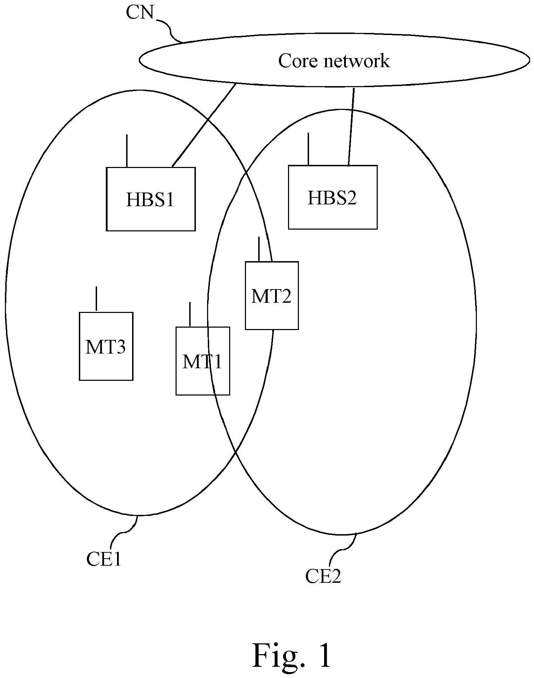

**Fig. 1** represents a wireless cellular telecommunication network in which the present invention is implemented.

The present invention is described in an example wherein home base stations implement the present invention. The present invention is also applicable for base stations which cover larger areas than home base stations.

In Fig. 1, two home base stations HBS1 and HBS2 of a wireless cellular telecommunication network and three mobile terminals MT1, MT2 and MT3 are shown.

Only two home base stations HBS1 and HBS2 and three mobile terminals MT1, MT2 and MT3 are shown but we can understand that the present invention works when a more important number of home base stations HBS and/or a more important number of mobile terminals MT exist.

The home base stations HBS1 and HBS2 are named also femto base stations or pico base stations or relays.

The home base station HBS1 is for example located into a first building and may enable mobile terminals MT associated to the home base station HBS1 to access the wireless cellular telecommunication network.

A mobile terminal MT associated to a home base station belongs to at least one closed subscriber group of the home base station HBS.

The home base station HBS2 is for example located into a second building and may enable mobile terminals MT associated to the home base station HBS2 to access the wireless cellular telecommunication network.

These home base stations HBS may enable a limited number of mobile terminals MT to access the wireless cellular telecommunication network through their respective resources. The mobile terminals MT allowed to access the resources of the wireless cellular telecommunication network through the home base station HBS may be determined by a management entity, not shown in Fig. 1, which manages the closed subscriber groups and their priority levels for a group of home base stations HBS.

For example, the home base station HBS1 is located in a university, more precisely in a building dedicated to mathematic sciences, and gives privileged access, i. e. a high priority level, to people having their office in that building. Other people, working in another building of the university, for example dedicated to physic sciences, may be allowed to access the resources of the wireless cellular telecommunication network through the home base station HBS1 with limited resources, i.e. at medium priority level. Finally students may be allowed to access the resources of the wireless cellular telecommunication network through the home base station HB S1 with low priority level.

For example, the home base station HBS2 is located in a university, more precisely in a building dedicated to physic sciences and gives privileged access, i.e. a high priority level, to people having their office in that building. Other people, for example working in another building of the university, for example dedicated to mathematic sciences, may be allowed to access the resources of the wireless cellular telecommunication network through the home base station HBS2 with limited resources, i.e. at medium priority level. Finally students may be allowed to access the resources of the wireless cellular telecommunication network through the home base station HBS2 with low priority level.

A privileged access or a limited access may be for example related to a quality of service, an amount of resources allocated for the communication with mobile terminals MT by the home base stations HBS1 and HBS2. For the rest of the description, they will be named priority levels.

It has to be noted here that two priority levels are given as example. The present invention is also applicable for a finer granularity of priority levels.

When a mobile terminal MT1 to MT3 is allowed to access the resources of the wireless cellular telecommunication network through a home base station HBS1 or HBS2, it can receive or establish or continue a communication with a remote telecommunication device.

The home base station HBS1 is able to receive signals transferred by mobile terminals MT which are located in the area CE1. The home base station HBS1 transfers signals which can be received and processed by mobile terminals MT located in the area CE1. The area CE1 is the cell of the home base station HBS1.

The home base station HBS2 is able to receive signals transferred by mobile terminals MT which are located in the area CE2. The home base station HBS2 transfers signals which can be received and processed by mobile terminals MT located in the area CE2. The area CE2 is the cell of the home base station HBS2.

According to the invention, the home base station HBS1 has plural Closed Subscriber Groups which determine the mobile terminals MT which are allowed to access the wireless cellular telecommunication network through the resources of the home base station HBS1.

According to the invention, the home base station HBS2 has plural Closed Subscriber Groups which determine the mobile terminals MT which are allowed to access the wireless cellular telecommunication network through the resources of the home base station HBS2.

The home base stations HBS1 and HBS2 broadcast signals identifying their respective cells CE1 and CE2, and signals identifying several closed subscriber groups CSG.

It has to be noted here that the present invention is also applicable when at least one home base station HBS has plural cells and broadcasts, for at least one of the cells, signals identifying several closed subscriber groups CSG.

The mobile terminals MT1 to MT3 have a white list which contains at least one closed subscriber group CSG identification of each home base station HBS through which they are allowed to access the wireless cellular telecommunication network.

When a mobile terminal MT receives a closed subscriber group CSG identification which belongs to its white list, the mobile terminal MT transfers signals to the home base station HBS which transferred that closed subscriber group CSG identification in order to be attached to the home base station HBS.

According to the example of Fig. 1, the mobile terminal MT1 is located in the cells CE1 and CE2, the mobile terminal MT2 is located in the cells CE1 and CE2 and the mobile terminal MT3 is located in the cell CE1.

The home base stations HBS1 and HBS2 are connected to a core network CN which may enable the transfer of information between the home base stations HBS.

According to the invention, at least one home base station HBS has plural closed subscriber groups, each closed subscriber group corresponding to a priority level provided to mobile terminals belonging to the closed subscriber group:
- the at least one home base station HBS transfers, for each closed subscriber group of the home base station HBS, one signal representative of the closed subscriber group of the home base station HBS,
- among the closed subscriber groups of the home base station HBS a mobile terminal MT belongs to, one of the closed subscriber groups which provide the highest priority levels to the mobile terminal MT is selected.

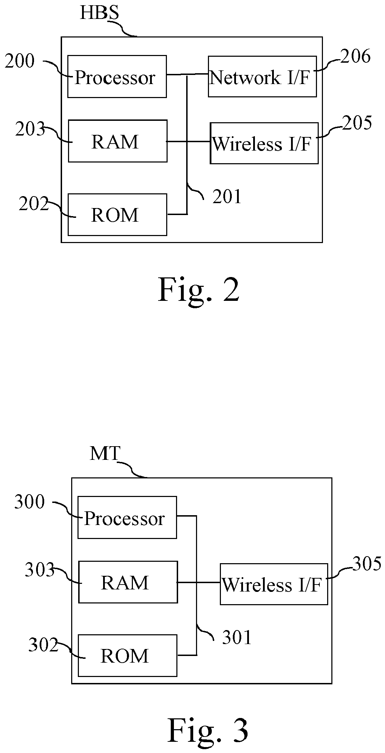

**Fig. 2** is a diagram representing the architecture of a home base station in which the present invention is implemented.

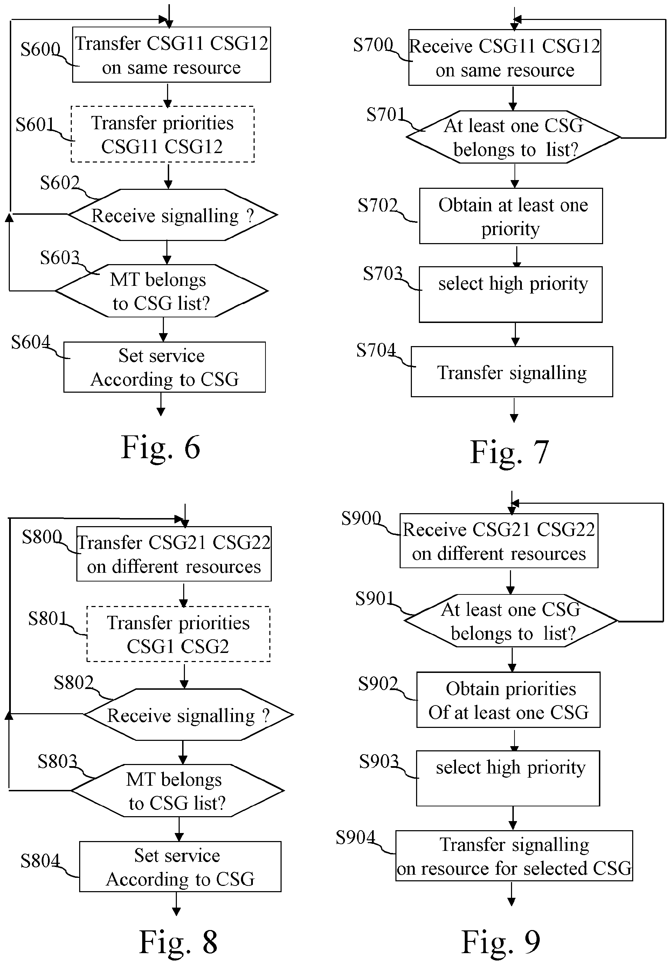

The home base station HBS has, for example, an architecture based on components connected together by a bus 201 and a processor 200 controlled by the programs as disclosed in Figs. 6 or 8 and/or 10 or 14.

The bus 201 links the processor 200 to a read only memory ROM 202, a random access memory RAM 203, a wireless interface 205 and a network interface 206.

The memory 203 contains registers intended to receive variables and the instructions of the programs related to the algorithms as disclosed in Figs. 6 or 8 and/or 10 or 14.

The processor 200 controls the operation of the network interface 206 and of the wireless interface 205.

The read only memory 202 contains instructions of the programs related to the algorithms as disclosed in Figs. 6 or 8 and/or 10 or 14, which are transferred, when the home base station HBS is powered on, to the random access memory 203.

The home base station HBS may be connected to the core network CN through the network interface 206. For example, the network interface 206 is a DSL (Digital Subscriber Line) modem, or an ISDN (Integrated Services Digital Network) interface, etc. The network interface 206 may be also a wireless interface which enables the transfer of information to and/or through the core network CN.

The wireless interface 205 and the network interface 206 are the resources of the home base station HBS used by a mobile terminal MT in order to access the wireless cellular telecommunication network when the mobile terminal MT establishes or receives a communication with a remote telecommunication device.

The wireless interface 205 comprises means for transferring signals identifying plural closed subscriber groups CSG on the same frequency resources or on different frequency resources.

Frequency resources are for example groups of frequency subcarriers.

**Fig. 3** is a diagram representing the architecture of a mobile terminal in which the present invention is implemented.

The mobile terminal MT has, for example, an architecture based on components connected together by a bus 301 and a processor 300 controlled by the program as disclosed in Figs. 7 or 9 and/or 11 or 12 or 13 and/or 15.

The bus 301 links the processor 300 to a read only memory ROM 2302, a random access memory RAM 303 and a wireless interface 305.

The memory 303 contains registers intended to receive variables and the instructions of the programs related to the algorithms as disclosed in Figs. 7 or 9 and/or 11 or 12 or 13 and/or 15.

The processor 300 controls the operation of the wireless interface 305.

The read only memory 302 contains instructions of the programs related to the algorithms as disclosed in Figs. 7 or 9 and/or 11 or 12 or 13 and/or 15, which are transferred, when the mobile terminal MT is powered on, to the random access memory 303.

The wireless interface 305 comprises means for receiving signals identifying plural closed subscriber groups CSG on the same frequency resources or on different frequency resources, priority levels of closed subscriber groups CSG and means for transferring signalling, like measurement reports, information indicating one closed subscriber group CSG, priority levels of closed subscriber groups CSG.

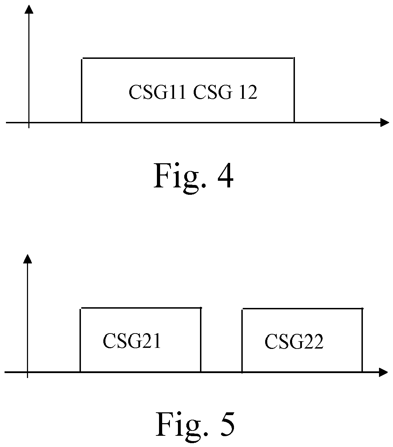

**Fig. 4** discloses an example of plural closed subscriber groups which are transferred by a first home base station according to the present invention.

The horizontal axis represents the frequency band and the vertical axis represents the presence of signals transferred on frequency resources of the frequency band.

For example, the home base station HBS1 transfers plural information identifying the closed subscriber groups CSG11 and CSG12 of the home base station HBS1.

For example, the mobile terminal MT1 belongs to the closed subscriber group CSG11 and has a high priority level when accessing the wireless cellular telecommunication network through the resources of the home base station HBS1. The mobile terminals MT2 and MT3 belong to the closed subscriber group CSG12 and have a medium priority level when accessing the resources of the home base station HBS1.

Information identifying the CSG11 and the CSG12 of the home base station HBS1 are transferred on the same frequency resources as shown in Fig. 4.

A frequency resource is a group of frequency subcarriers.

**Fig. 5** discloses an example of plural closed subscriber groups which are transferred by a second home base station according to the present invention.

The horizontal axis represents the frequency band and the vertical axis represents the presence of signals transferred on frequency resources of the frequency band.

For example, the home base station HBS2 transfers plural information identifying the closed subscriber groups CSG21 and CSG22 of the home base station HBS2.

For example, the mobile terminal MT2 belongs to the closed subscriber group CSG21 and has a high priority level when accessing the wireless cellular telecommunication network through the resources of the home base station HBS2. The mobile terminal MT1 belongs to the closed subscriber group CSG22 and has a medium priority level when accessing the wireless cellular telecommunication network through the resources of the home base station HBS2.

Information identifying the closed subscriber groups CSG21 and the CSG22 of the home base station HBS2 are transferred on different frequency resources as shown in Fig. 5.

As shown in Fig. 5, the closed subscriber group CSG21 is transferred on a first frequency resource and the closed subscriber group CSG22 is transferred on a second frequency resource distinct from the first frequency resource.

For example, the mobile terminal MT1 has in its white list the closed subscriber group identification CSG11 of the home base station HBS1 and the closed subscriber group CSG22 of the home base station HBS2.

The mobile terminal MT2 has in its white list the closed subscriber group identification CSG12 of the home base station HBS1 and the closed subscriber group CSG21 of the home base station HBS2.

The mobile terminal MT3 has in its white list the closed subscriber group identification CSG12 of the home base station HBS1.

**Fig. 6** discloses a first example of an algorithm executed by the first home base station according to the present invention.

More precisely, the present algorithm is executed by the processor 200 of the home base station HBS1.

The present algorithm may be executed when the home base station HBS1 is powered on or when the core network requests the execution of the present algorithm or is executed periodically.

The present algorithm is executed for mobile terminals MT which are not served by a home base station or a base station.

At step S600, the processor 200 commands the transfer through the wireless interface 205 of information identifying the closed subscriber groups CSG11 and CSG12 of the home base station HBS1 on the same frequency resources as disclosed in Fig. 4.

At next step S601, the processor 200 commands the transfer, through the wireless interface 205, of information identifying the access right or in other words information identifying the priority level of the closed subscriber group CSG11 and information identifying the priority level of the closed subscriber group CSG12 of the home base station HBS1.

It has to be noted here that in a variant, the step S601 is not executed. In that case, the processor 200 moves from step S600 to S602.

At step S602, the processor 200 checks if signalling is received from at least one mobile terminal MT in response to the information transferred at step S600 or S600 and S601.

If no signalling is received, the processor 200 returns to step S600. Otherwise, the processor 200 moves to step S603.

The signalling comprises information identifying the mobile terminal MT which sends the signalling and information identifying one of the closed subscriber groups CSG11 and CSG12, the mobile terminal MT which sends the signalling belongs to.

At step S603, the processor 200 checks if the mobile terminal MT which sends the signalling is comprised in the identified closed subscriber group.

If the mobile terminal MT which sends the signalling does not belong to the identified closed subscriber group, the processor 200 returns to step S600. Otherwise, the processor 200 moves to step S604.

At step S604, the processor 200 sets the priority level corresponding to the identified closed subscriber group for the mobile terminal MT which transferred the signalling.

After that the processor 200 returns to step S600.

**Fig. 7** discloses an example of an algorithm executed by a mobile terminal when the first home base station executes the algorithm of Fig. 6.

More precisely, the present algorithm is executed by the processor 300 of each mobile terminal MT.

The present algorithm will be disclosed when it is executed by the processor 300 of the mobile terminal MT 1.

The present algorithm is executed when the mobile terminal MT1 is not served by a home base station HBS or a base station.

At step S700, the processor 200 is notified by the wireless interface 305 that information identifying at least one closed subscriber group of at least one home base station HBS are received on the same frequency resources.

At next step S701, the processor 300 checks if information identifying at least one closed subscriber group of at least one home base station HBS belong to its white list.

If no information identifying at least one closed subscriber group of at least one home base station HBS belongs to its white list, the processor 300 returns to step S700. Otherwise, the processor 300 moves to step S702.

For example, the closed subscriber groups CSG11 and CSG12 of the home base station HBS1 are received at step S700 on the same frequency resources and the closed subscriber groups CSG21 and CSG22 of the home base station HBS2 are received also at step S700

At next step S702, the processor 300 obtains information identifying the access right or in other words the priority level of closed subscriber groups CSG11 and CSG22 belonging to its white list.

Information identifying the priority of closed subscriber groups CSG11 and CSG22 may be received through the wireless interface 305 or stored in the white list of the mobile terminal MT.

At next step S703, the processor 300 selects information identifying the closed subscriber group CSG belonging to its white list and which has the highest priority among the closed subscriber groups CSG11 and CSG22.

According to the above mentioned example, the processor 300 selects the closed subscriber group CSG11 as it has a high priority level, i.e. the highest priority level or selects one of the closed subscriber groups which have the highest priority levels.

In a variant, the processor 300 selects information identifying the closed subscriber group CSG belonging to its white list and which has high signal quality reception and which has the highest priority level.

It has to be noted here that the processor 300 may select another closed subscriber group with a lower priority level than the highest one if measurements on received signals for the closed subscriber group CSG having the highest priority level are much lower than measurements on received signals for the closed subscriber group CSG having the lower priority level.

For example, if there are ten possible priority levels, the processor 300 selects among the three highest priority levels, the one which has best measurements on received signals.

At next step S704, the processor 300 commands the transfer of signalling to the home base station HBS1.

The signalling comprises information identifying the mobile terminal MT1 and information identifying the selected closed subscriber group CSG11.

**Fig. 8** discloses an example of an algorithm executed by the second home base station according to the present invention.

More precisely, the present algorithm is executed by the processor 200 of the home base station HBS2.

The present algorithm may be executed when the home base station HBS2 is powered on or when the core network requests the execution of the present algorithm or is executed periodically.

The present algorithm is executed for mobile terminals MT which are not served by a home base station or a base station.

At step S800, the processor 200 commands the transfer through the wireless interface 205 of information identifying the closed subscriber group CSG21 and the closed subscriber group CSG22 of the home base station HBS2 on different frequency resources as shown in Fig. 5.

At next step S801, the processor 200 commands the transfer, through the wireless interface 205, of information identifying the priority level of the closed subscriber group CSG21 and information identifying the priority level of the closed subscriber group CSG22 of the home base station HBS2.

It has to be noted here that in a variant, the step S801 is not executed. In that case, the processor 200 moves from step S800 to S802.

At step S802, the processor 200 checks if signalling is received from at least one mobile terminal MT in response to the information transferred at step S800 or S800 and S801.

If no signalling is received, the processor 200 returns to step S800. Otherwise, the processor 200 moves to step S803.

The signalling comprises information identifying the mobile terminal MT and is received on the same frequency resource as that used for transferring information identifying one closed subscriber group CSG selected by the mobile terminal MT among those transferred by the home base station HBS2. By receiving the signalling on the same frequency resource as that used for transferring information identifying a closed subscriber group, the processor 200 does not need further information to identify which closed subscriber group CSG21 or CSG22, the mobile terminal MT which sends the signalling has selected.

At step S803, the processor 200 checks if the mobile terminal MT which sends the signalling belongs to the identified closed subscriber group.

If the mobile terminal MT which sends the signalling does not belong to the identified closed subscriber group, the processor 200 returns to step S800. Otherwise, the processor 200 moves to step S804.

At step S804, the processor 200 sets the priority level corresponding to the identified closed subscriber group CSG for the mobile terminal MT which transferred the signalling and allocates resources to the mobile terminal MT taking into account the priority level.

It has to be noted here that, when the mobile terminal MT is in communication with a remote telecommunication device through the home base station HBS2, the home base station HBS2 schedules the transfer of data to and/or from the mobile terminal MT on one or both of the frequency resources used for the transfer of information identifying the closed subscriber group CSG21 and the closed subscriber group CSG22 and/or on other frequency resources.

After that the processor 200 returns to step S800.

**Fig. 9** discloses an example of an algorithm executed by a mobile terminal when the second home base station executes the algorithm of Fig. 8.

More precisely, the present algorithm is executed by the processor 300 of each mobile terminal MT.

The present algorithm will be disclosed when it is executed by the processor 300 of the mobile terminal MT2.

The present algorithm is executed when the mobile terminal MT2 is not served by a home base station or a base station.

At step S900, the processor 200 is notified by the wireless interface 305 that information identifying at least one closed subscriber group of at least one home base station HBS is received on the different frequency resources.

At next step S901, the processor 300 checks if information identifying at least one closed subscriber group of at least one home base station HBS belong to its white list.

If no information identifying at least one closed subscriber group of at least one home base station HBS belongs to its white list, the processor 300 returns to step S900. Otherwise, the processor 300 moves to step S902.

For example at step S900, information identifying closed subscriber groups CSG21 and CSG22 of the home base station HBS2 are received on different frequency resources and closed subscriber groups CSG11 and CSG12 of the home base station HBS1 are also received at the same step.

At next step S902, the processor 300 obtains information identifying the priority levels of closed subscriber groups CSG21 and CSG12 belonging to its white list.

Information identifying the priority level of closed subscriber groups CSG21 and CSG12 may be received through the wireless interface 305 or stored in the white list of the mobile terminal MT2.

At next step S903, the processor 300 selects information identifying the closed subscriber group CSG belonging to its white list and which has the highest priority among the closed subscriber groups CSG21 and CSG12.

The processor 300 selects the closed subscriber group CSG21 as it has a high priority level, i.e. the highest priority level, or selects one of the closed subscriber groups which have the highest priority levels.

In a variant, the processor 300 selects information identifying the closed subscriber group CSG belonging to its white list and which has high signal quality reception, i.e. a signal quality reception which is higher than a predetermined threshold, and which has one of the closed subscriber groups which provide the highest priority levels.

It has to be noted here that the processor 300 may select another closed subscriber group with a lower priority level than the highest one if measurements on received signals for the closed subscriber group CSG having the highest priority level are much lower than measurements on received signals for the closed subscriber group CSG having the lower priority level.

For example, the processor 300 selects among the highest priority level and next priority level, the one which has the best measurements on received signals.

For example, if there are ten possible priority levels, the processor 300 selects among the three highest priority levels, the one which has the best measurements on received signals.

At next step S904, the processor 300 commands the transfer of signalling to the home base station HBS2.

The signalling comprises information identifying the mobile terminal MT2 and is transferred on the same frequency resource as the information identifying the closed subscriber group CSG21 is received on.

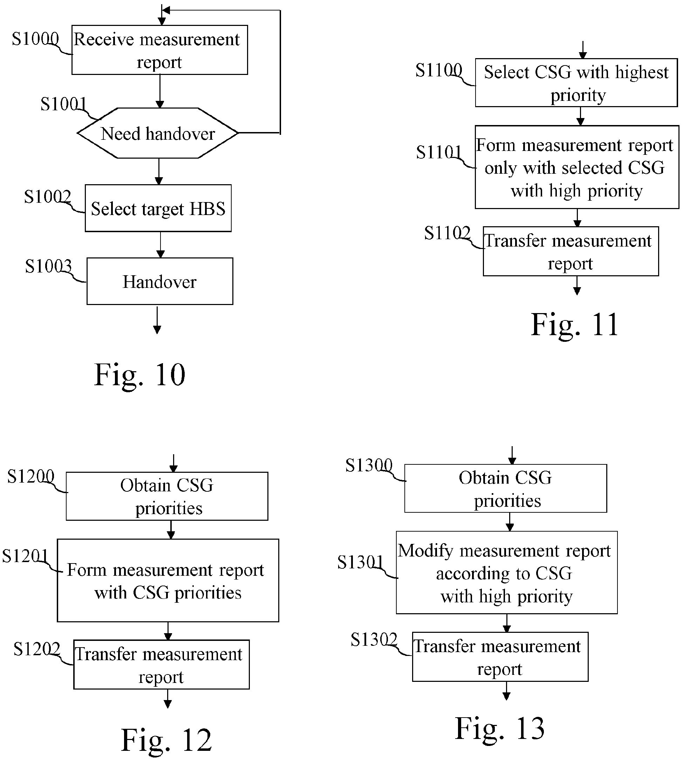

Fig. 10 discloses a first example of an algorithm executed by the first and/or the second home base stations according to the present invention.

More precisely, the present algorithm is executed by the processor 200 of the home base stations HBS.

The present algorithm is executed for mobile terminals MT which are currently in communication with a remote telecommunication device through a serving home base station HBS or a base station.

The present algorithm will be disclosed in an example where it is executed by the processor 200 of the home base station HBS1.

At step S1000, the processor 200 detects the reception, through the wireless interface 205, of a measurement report transferred by a mobile terminal MT, for example the mobile terminal MT2 currently served by the home base station HBS1.

At next step S1001, the processor 200 checks if a handover needs to be performed for the mobile terminal MT2.

For example, a handover needs to be performed when signals transferred by the home base station HBS1 and received by the mobile terminal MT2 are received with lower power than signals transferred by another home base station and received by the mobile terminal MT2.

For example, a handover needs to be performed when signals transferred by the home base station HBS1 are received by the mobile terminal MT2 at a signal plus noise interference ratio lower than the signal plus noise interference ratio on signals transferred by another home base station and received by the mobile terminal MT2.

If no handover needs to be performed, the processor 200 returns to step S1000. Otherwise, the processor 200 moves to step S1002.

At next step S1002, the processor 200 selects a target home base station HBS to which the mobile terminal MT2 needs to be handed over.

The target home base station HBS may be selected as the one the signals of which are received with a good power by the mobile terminal MT2, i.e. a power which is higher than a predetermined threshold, and which has at least one closed subscriber group CSG with the highest or one of the highest priority levels among other home base stations HBS identified in at least one received measurement report.

It has to be noted here that the processor 200 may select another target home base station HBS which has a closed subscriber group with a lower priority level than the highest one if measurements for the closed subscriber group CSG having the highest priority level are much lower than measurements for the closed subscriber group CSG having the lower priority level.

For example, the processor 200 selects among the highest priority level and next priority level, the one which has the best measurements on received signals.

For example, if there are ten possible priority levels, the processor 200 selects among the three highest priority levels, the one which has the best measurements.

The target home base station HBS may be selected as the one of which signals are received by the mobile terminal MT2 at a good quality, i.e., at a good signal plus noise interference ratio, and with at least one closed subscriber group CSG which has the highest priority level or one of the highest priority levels among other home base stations HBS identified in at least one received measurement report.

The priority level of the different closed subscriber groups CSG may be comprised in one measurement report, for example by providing an ordered measurement report, in which measurements corresponding to different closed subscriber groups CSG are ordered according to their respective priorities.

The priority level of the different closed subscriber group CSG may be comprised in one measurement report, for example by adding information bits in the measurement report.

For instance, two information bits indicate relative values. The value 0 indicates, among priority levels received by the mobile terminal MT in the neighbourhood, the highest priority level, value 1 the two following priority levels, value 2 the fourth and fifth priority levels, value 3 the rest of priority levels.

For instance, plural information bits indicate absolute predetermined values. The value 0 indicates the highest priority level, value 1 for the following priority level and so on.

The priority level of the different closed subscriber groups CSG may be comprised in plural measurement reports.

For example, one measurement report providing one measurement on signal transferred by the base station HBS2 and one measurement report providing one measurement on signal transferred by a neighbouring home base station HBS are transferred. In that case, the order to transfer the measurement reports is dependent of the priority of each closed subscriber group.

The mobile terminal MT2 ranks the measurements corresponding to the closed subscriber groups identified in its white list in a way corresponding to priorities levels of the closed subscriber groups and transfers each measurement report according to the priority level.

For example, the mobile terminal MT2 adds at least one information bit in each measurement report.

For instance, two information bits indicate relative values. The value 0 indicates, among priority levels received by the mobile terminal MT in the neighbourhood, the highest priority level, value 1 the two following priority levels, value 2 the fourth and fifth priority levels, value 3 the rest of priority levels.

It has to be noted here that when plural measurement reports are received, if the priority levels corresponding to different values have to be reset, the mobile terminal MT sends a reset bit in the measurement report or the mobile terminal MT transfers more bits to indicate level change of priority levels.

For instance, plural information bits indicate absolute predetermined values. The value 0 indicates the highest priority level, value 1 the following priority level and so on.

It has to be noted here that, to limit the number of bits in the reports, the different measurements can be grouped in priority classes and a measurement report includes information identifying only one priority class.

The priority of different closed subscriber groups CSG may not be comprised in the measurement report and may be obtained by the processor 200 from neighbouring home base stations HBS through the core network CN or from the management entity.

At next step S1003, the processor 200 executes the handover of the mobile terminal MT2 to the selected target home base station HBS.

**Fig. 11** discloses a first example of an algorithm executed by a mobile terminal when the first and/or the second home base stations execute the algorithm of Fig. 10.

More precisely, the present algorithm is executed periodically by the processor 300 of the mobile terminals MT.

The present algorithm is executed by each mobile terminal MT which is currently in communication with a remote telecommunication device through a serving home base station HBS or a base station.

At step S1100, the processor 300 selects among the signals received by the mobile terminal MT from plural home base stations, the one or the ones belonging to its white list and which has or have the information identifying the highest priority level or levels of closed subscriber group CSG.

In a variant, the processor 300 selects information identifying the closed subscriber group CSG belonging to its white list and which has high signal quality reception and which has a high priority level, i.e. the highest priority level or one of the highest priority levels.

It has to be noted here that the processor 300 may select another closed subscriber group with a lower priority level than the highest one if measurements on received signals for the closed subscriber group CSG having the highest priority level are much lower than measurements on received signals for the closed subscriber group CSG having the lower priority level.

For example, the processor 300 selects among the highest priority level and next priority level, the one which has the best measurements on received signals.

For example, if there are ten possible priority levels, the processor 300 selects among the three highest priority levels, the one which has the best measurements on received signals.

Information identifying the priority level of closed subscriber group CSG may be received through the wireless interface 305 or stored in the white list of the mobile terminal MT.

At next step S1101, the processor 300 forms a measurement report which comprises only measurements related to the selected signal or signals.

At next step S1102, the processor 300 commands the transfer, through the wireless interface 305, of the formed measurement report.

**Fig. 12** discloses a second example of an algorithm executed by a mobile terminal when the first and/or the second home base stations execute the algorithm of Fig. 10.

More precisely, the present algorithm is executed periodically by the processor 300 of the mobile terminals MT.

The present algorithm is executed by each mobile terminal MT which is currently in communication with a remote telecommunication device through a serving home base station HBS or a base station.

At step S1200, the processor 300 obtains the information identifying the priority of closed subscriber group CSG for the signals on which measurements are performed.

Information identifying the priority of the closed subscriber group CSG may be received through the wireless interface 305 or stored in the white list of the mobile terminal MT.

At next step S1201, the processor 300 forms at least one measurement report which comprises measurements on signals together with the obtained information identifying the priority of the closed subscriber group CSG for the signals on which measurements are performed.

The priority level of the different closed subscriber groups CSG may be comprised in one measurement report, for example by adding information bits in the measurement report.

For instance, two information bits indicate relative values. The value 0 indicates, among priority levels received by the mobile terminal MT in the neighbourhood, the highest priority level, value 1 the two following priority levels, value 2 the fourth and fifth priority levels, value 3 the rest of priority levels.

For instance, plural information bits indicate absolute predetermined values. The value 0 indicates the highest priority level, value 1 for the following priority level and so on.

The priority level of the different closed subscriber groups CSG may be comprised in plural measurement reports.

For example, one measurement report providing one measurement on signal transferred by the base station HBS2 and one measurement report providing one measurement on signal transferred by a neighbouring home base station HBS is transferred. In that case, the order to transfer the measurement reports is dependent of the priority of each closed subscriber group.

The mobile terminal MT2 ranks the measurements corresponding to the closed subscriber groups identified in its white list in a way corresponding to priorities levels of the closed subscriber groups and transfer each measurement report according to the priority level.

For example, the mobile terminal MT2 adds at least one information bit in each measurement report.

For instance, two information bits indicate relative values. The value 0 indicates, among priority levels received by the mobile terminal MT in the neighbourhood, the highest priority level, value 1 the two following priority levels, value 2 the fourth and fifth priority levels, value 3 the rest of priority levels.

It has to be noted here that when plural measurement reports are received, if the levels have to be reset, the mobile terminal MT sends a reset bit in the measurement report or the mobile terminal MT transfers more bits to indicate level change of priority levels.

For instance, plural information bits indicate absolute predetermined values. The value 0 indicates the highest priority level, value 1 the following priority level and so on.

It has to be noted here that, to limit the number of bits in the reports, the different measurements can be grouped in priority classes and a measurement report includes information identifying only one priority class.

At next step S1202, the processor 300 commands the transfer, through the wireless interface 305, of the at least one formed measurement report.

**Fig. 13** discloses a third example of an algorithm executed by a mobile terminal when the first and/or the second home base stations execute the algorithm of Fig. 10.

More precisely, the present algorithm is executed periodically by the processor 300 of the mobile terminals MT.

The present algorithm is executed by each mobile terminal MT which is currently in communication with a remote telecommunication device through a serving home base station HBS or a base station.

At step S1300, the processor 300 obtains the information identifying the priority levels of closed subscriber groups CSG for the signals on which measurements are performed.

Information identifying the priority level of the closed subscriber groups CSG may be received through the wireless interface 305 or stored in the white list of the mobile terminal MT.

At next step S1301, the processor 300 forms at least one measurement report which comprises at least one measurement on at least one signal and in which measurements are based according to the priority level or levels of the closed subscriber group or groups corresponding to the measured signal or signals.

For example each measurement is multiplied by a coefficient, the value of which is dependent of the priority level of the closed subscriber group or groups corresponding to the measured signal.

The higher the priority level is, the higher the coefficient value is.

At next step S1302, the processor 300 commands the transfer, through the wireless interface 305, of the formed measurement report.

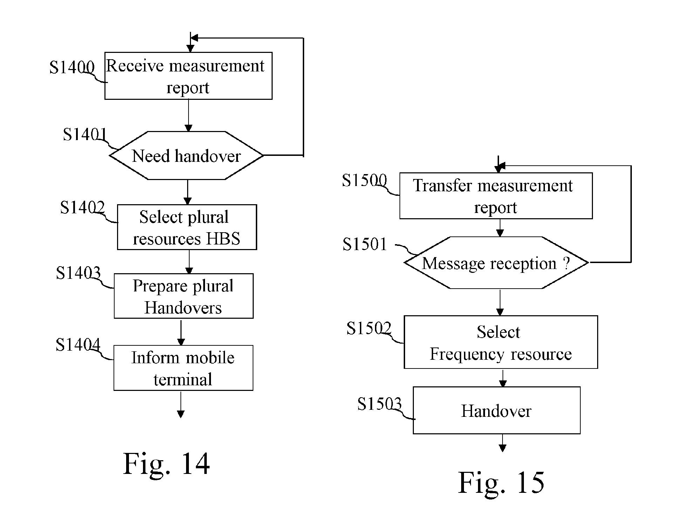

**Fig. 14** discloses a second example of an algorithm executed by the first and/or the second home base station according to the present invention.

More precisely, the present algorithm is executed by the processor 200 of the home base stations HBS2.

The present algorithm is executed for mobile terminals MT which are currently in communication with a remote telecommunication device through a serving home base station HBS or a base station.

At step S1400, the processor 200 detects the reception, through the wireless interface 205, of at least one measurement report transferred by a mobile terminal MT.

At next step S1401, the processor 200 checks if a handover needs to be performed for the mobile terminal MT.

For example, a handover needs to be performed when signals transferred by the home base station HBS1 are received by the mobile terminal MT with a lower power than signals transferred by another home base station and received by the mobile terminal MT.

For example, a handover needs to be performed when signals transferred by the home base station HBS1 are received by the mobile terminal MT at a signal plus noise interference ratio lower than the signal plus noise interference ratio on signals transferred by another home base station and received by the mobile terminal MT.

If no handover needs to be performed, the processor 200 returns to step S1400. Otherwise, the processor 200 moves to step S1402.

At next step S1402, the processor 200 selects plural neighbouring home base stations HBS and/or plural frequency resources used by neighbouring home base stations HBS to which the mobile terminal MT can be handed over to according to the measurement values.

At next step S1403, the processor 200 commands the preparation of the handover with each selected neighbouring home base station HBS and/or selected frequency resource used by neighbouring home base stations HBS.

At next step S1404, the processor 200 commands the transfer of a message to the mobile terminal MT indicating each selected neighbouring home base station HBS and/or each selected frequency resource used by neighbouring home base stations HBS.

**Fig. 15** discloses an example of an algorithm executed by a mobile terminal when the first and/or the second home base stations execute the algorithm of Fig. 14.

More precisely, the present algorithm is executed by the processor 300 of the mobile terminals MT periodically.

The present algorithm is executed by each mobile terminal MT which is currently in communication with a remote telecommunication device through a serving home base station HBS.

At step S1500, the processor 300 forms at least one measurement report which comprises measurements on signals received from at least one home base station HBS and/or on signals received on at least one frequency resource used by at least one neighbouring home base station HBS.

At next step S1501, the processor 300 checks if a message is received from the home base station HBS notifying that the mobile terminal has to be handed over to at least one neighbouring home base station HBS and/or selected frequency resources used by at least one neighbouring home base station HBS indicated in the message.

If a message is received notifying that the mobile terminal has to be handed over to at least one neighbouring home base station HBS and/or selected frequency resources, the processor 300 moves to step S1502. Otherwise, the processor 300 returns to step S1500.

At next step S1502, the processor 300 obtains the information identifying the priority of closed subscriber groups CSG for the signals on which measurements are performed, belonging to its white list and indicated in the message received at step S1501.

Information identifying the priority of closed subscriber groups CSG may be received through the wireless interface 305 or stored in the white list of the mobile terminal MT.

The processor 300 selects the neighbouring home base station which has high signal quality reception and at least one closed subscriber group CSG which has the highest priority level or one of the highest priority levels.

The processor 300 also selects one closed subscriber group CSG of the neighbouring home base station which has the highest priority level or one of the highest priority levels and/or one frequency resource of the neighbouring home base station on which the information identifying one closed subscriber group CSG which has the highest priority level or one of the highest priority levels is received.

It has to be noted here that the processor 300 may select another closed subscriber group with a lower priority level than the highest one if measurements on received signals for the closed subscriber group CSG having the highest priority level are much lower than measurements on received signals for the closed subscriber group CSG having the lower priority level.

For example, the processor 300 selects among the highest priority level and next priority level, the one which has the best measurements on received signals.

For example, if there are ten possible priority levels, the processor 300 selects among the three highest priority levels, the one which has the best measurements on received signals.

At next step S1503, the processor 300 commands the execution of a handover to the selected neighbouring home base station. The processor 300 commands the transfer of signalling to the neighbouring home base station HBS. The signalling comprises information identifying the mobile terminal MT1. The signalling may comprise information identifying the selected closed subscriber group CSG and may be transferred on the same frequency resource or not as the information identifying the selected closed subscriber group CSG is received on.

Naturally, many modifications can be made to the embodiments of the invention described above without departing from the scope of the present invention.

## Claims

1. Method for enabling a mobile terminal to be served by a base station according to a priority level among plural priority levels that the base station provides to mobile terminals, **characterized in that** the base station has plural closed subscriber groups, each closed subscriber group corresponding to a priority level provided to mobile terminals belonging to the closed subscriber group, the method comprising the steps of:
- transferring by the base station, for each closed subscriber group of the base station, a signal representative of the closed subscriber group of the base station,
- selecting, among the closed subscriber groups of the base station the mobile terminal belongs to, one of the closed subscriber groups which provide the highest priority levels to the mobile terminal.

2. Method according to claim 1, **characterised in that** at least one signal representative of a closed subscriber group is transferred on a frequency resource different from the frequency resource on which other signal or signals representative of a closed subscriber group or groups is or are transferred and **in that** once data are transferred between the base station and the mobile terminal, data are scheduled on any frequency resource.

3. Method according to claim 1 or 2, **characterized in that** the selection of one of the closed subscriber groups which provide the highest priority levels to the mobile terminal is performed by the mobile terminal.

4. Method according to any of the claims 1 to 3, **characterized in that** the priority level of each closed subscriber group is broadcasted by the base station.

5. Method according to any of the claims 1 to 3, **characterized in that** the priority level of each closed subscriber group is memorized by the mobile terminal.

6. Method according to any of the claims 3 to 5, **characterized in that** the mobile terminal transfers to the base station at least one measurement report on signals received by the mobile terminal from at least one base station and **in that** the mobile terminal reports only measurements on signals corresponding to the subscriber group or groups which provides or provide the highest priority level or levels to the mobile terminal.

7. Method according to any of the claims 3 to 5, **characterized in that** the mobile terminal transfers to the base station at least one measurement report on at least one signal received by the mobile terminal from at least one neighbouring base station and the mobile terminal modifies measurements according to the priority level or levels corresponding to the measured signal or signals.

8. Method according to claim 1 or 2 or 4 or 5, **characterized in that** the selection of one of the closed subscriber groups which provide the highest priority levels to the mobile terminal is performed by the base station from at least one measurement report provided by the mobile terminal, the at least one measurement report comprising measurements on signals received by the mobile terminal from at least one neighbouring base station.

9. Method according to claim 8, **characterized in that** the at least one measurement report further comprises information indicating the priority levels of at least a part of the closed subscriber groups the mobile terminal belongs to.

10. Method according to claim 9, **characterized in that** information indicating the priority levels of at least a part of the closed subscriber groups the mobile terminal belongs to is under the form of information bits.

11. Method according to claim 9, **characterized in that** information indicating the priority levels of at least a part of the closed subscriber groups the mobile terminal belongs to is the order of the measurements within the measurement report.

12. Method according to claim 8, **characterized in that** the base station obtains information indicating the priority levels of at least a part of the closed subscriber groups the mobile terminal belongs to from at least one other base station.

13. System for enabling a mobile terminal to be served by a base station according to a priority level among plural priority levels that the base station provides to mobile terminals, **characterized in that** the base station has plural closed subscriber groups, each closed subscriber group corresponding to a priority level provided to mobile terminals belonging to the closed subscriber group, the system comprising:
- means for transferring by the base station, for each closed subscriber group of the base station, a signal representative of the closed subscriber group of the base station,
- means for selecting, among the closed subscriber groups of the base station the mobile terminal belongs to, one of the closed subscriber groups which provide the highest priority levels to the mobile terminal.

14. Computer program which can be directly loadable into a programmable device, comprising instructions or portions of code for implementing the steps of the method according to claims 1 to 12, when said computer program is executed on a programmable device.
